# FASCICULE DE BREVET EUROPEEN

(11) **EP 3 156 268 B1**
(45) Date de publication et mention de la délivrance du brevet: **19.06.2019**
(21) Numéro de dépôt: 16193709.9
(22) Date de dépôt: 13.10.2016
(51) Int. Cl.: B60D 1/14, B60D 1/167, B62D 63/06

(54) **REMORQUE COMPORTANT UN TIMON MUNI DE MOYENS DE FIXATION RAPIDE SUR UN CHASSIS DE LA REMORQUE**
ANHÄNGER MIT EINER DEICHSEL MIT SCHNELLBEFESTIGUNGSMITTELN AUF EINEM FAHRGESTELL DES ANHÄNGERS
TRAILER COMPRISING A DRAW BAR PROVIDED WITH MEANS FOR QUICK INSTALLATION ONTO A CHASSIS OF THE TRAILER

(30) Priorité: 13.10.2015 FR 1559728
(43) Date de publication de la demande: 19.04.2017
(73) Titulaire: TRIGANO REMORQUES, 75019 Paris (FR)
(72) Inventeur: Chevalier, Mikaël, 18230 Saint Doulchard (FR)
(74) Mandataire: Gevers & Orès

(56) Documents cités:
- AU-A- 2 396 077
- DE-A1- 3 200 792
- US-A- 4 511 181
- US-A- 4 875 724
- US-A1- 2014 375 080

## Description

### DOMAINE TECHNIQUE DE L'INVENTION

L'invention concerne une remorque pour véhicule automobile, la remorque comportant :
- un châssis roulant ;
- un timon longitudinal qui comporte au moins un bras arrière dont un tronçon d'extrémité longitudinale arrière est destiné à être fixé au châssis par des moyens de fixation.

### ARRIERE PLAN TECHNIQUE DE L'INVENTION

L'invention concerne des remorques, notamment des remorques dites "bagagères", qui sont aptes à être attelés à des véhicules de tourismes ou à des véhicules utilitaires tels que des fourgonnettes. L'utilisation de remorques est bien connue et largement répandue. De telles remorques permettent par exemple à un véhicule de transporter des charges supplémentaires lorsque le compartiment de transport du véhicule est trop petit ou déjà encombré.

La remorque comporte un châssis roulant qui comporte au moins un essieu transversal portant deux roues. Le châssis est muni d'un plateau de chargement apte à recevoir une charge à transporter.

La remorque comporte un timon, parfois appelé "flèche", qui est fixé au châssis roulant. L'extrémité avant du timon est munie d'un dispositif d'attelage sur le véhicule automobile. Le véhicule est généralement muni d'un crochet ou d'une boule d'attelage, tandis que le timon de la remorque comporte un anneau ou une boîte à rotule qui est destiné à être accroché audit crochet.

Après sa fixation sur le châssis, le timon présente un tronçon avant qui fait saillie longitudinalement vers l'avant par rapport au plateau de chargement. Le tronçon en saillie peut représenter jusqu'à un quart de la longueur du plateau de chargement. La longueur d'une remorque équipée de son timon peut par exemple dépasser 2,60 m
Les remorques sont généralement vendues par des revendeurs. Les remorques sont généralement transportées par lot jusqu'au local du revendeur par un véhicule de livraison, par exemple dans un camion.

Il est particulièrement avantageux de transporter les remorques avec le timon démonté du châssis roulant. La remorque ainsi démontée est beaucoup plus compacte. Ceci permet un remplissage plus efficace du véhicule de livraison. Il est notamment possible de transporter les remorques debout, avec le plateau orienté verticalement.

Cependant, il est préférable, voire obligatoire selon certaines législations, de fournir la remorque montée à l'utilisateur final. Le revendeur doit donc prendre en charge l'assemblage final du timon sur le châssis roulant.

Pour ce faire, les timons comportent un ou deux bras d'extrémité arrière qui sont chacun percé d'un orifice transversal de fixation. Chaque bras est reçu contre un flasque vertical associé fixé sur le châssis. Le flasque est aussi préalablement percé d'un orifice de fixation. Lorsque les orifices de fixation sont alignés, une vis transversale est introduite dans les orifices pour réaliser la fixation du timon avec le châssis roulant.

Un tel mode de réalisation est par exemple divulgué par les documents US 4,511,181 A et US 2014/0375080.

Cependant, le timon est un élément lourd et encombrant. L'assemblage du timon sur le châssis roulant est donc une opération qui nécessite généralement deux opérateurs. Un premier opérateur s'occupe de positionner le timon sous le châssis. Pendant que le premier opérateur maintient le timon en position, le deuxième opérateur chargé de l'assemblage est contraint de se coucher sous le plateau du châssis roulant pour mettre en place les vis de fixation du timon.

Une telle opération requiert ainsi du temps et du personnel, notamment lorsque plusieurs remorques ont été livrées au revendeur.

Le document DE 32 00 792 A1 propose une remorque présentant un timon susceptible d'être escamoté grâce à une liaison pivotante. Cependant, ce document ne propose pas de solution pour permettre de fixer le timon simplement et rapidement sur le châssis lorsque le timon est entièrement démonté.

L'invention propose de simplifier cette opération d'assemblage du timon en permettant à une personne seule de fixer le timon sur le châssis roulant.

### BREF RESUME DE L'INVENTION

L'invention propose ainsi une remorque du type décrit précédemment, caractérisé en ce que les moyens de fixation comportent des moyens d'emboîtement formés d'un premier organe d'emboîtement porté par le tronçon d'extrémité arrière du bras qui est destiné à être emboîté avec un deuxième organe d'emboîtement complémentaire porté par le châssis, les moyens de fixation comportant des moyens de verrouillage des organes d'emboîtement en position emboîtée qui sont embarqués sur le timon et/ou sur le châssis et qui sont commandés entre un état de libération et un état verrouillé.

Selon d'autres caractéristiques de la remorque :
- les moyens d'emboîtement forment une liaison pivotante autour d'un axe transversale entre le timon et le châssis;
- les moyens de verrouillage comportent une came de contact qui commande automatiquement les moyens de verrouillage dans leur état verrouillé lors de l'emboîtement des organes d'emboîtement l'un dans l'autre ;
- les organes d'emboîtement sont emboîtables selon une direction orthogonale à la direction transversale ;
- le premier organe d'emboîtement est formé par une fente qui débouche par une ouverture dans une direction orthogonale à la direction transversale, le deuxième organe d'emboîtement étant formé par une barre transversale fixe du châssis qui est destinée à être insérée dans la fente, les moyens de verrouillage comportant un loquet mobile entre une position de libération de l'ouverture de la fente et une position de fermeture de l'ouverture de la fente ;
- la came commande le loquet vers sa position de fermeture, la came étant interposée dans la fente avant insertion de la barre pour commander automatiquement le loquet dans sa position de fermeture lors de l'insertion de la barre ;
- le loquet est rappelé élastiquement vers sa position de libération ;
- les moyens de verrouillage comportent un cliquet de verrouillage automatique du loquet en position de fermeture par emboîtement élastique de formes complémentaires entre le loquet et le cliquet ;
- le loquet est monté pivotant autour d'un axe transversal sur le tronçon d'extrémité arrière du bras ;
- la came et le loquet forment chacun un doigt d'une pièce unique en forme de "U" apte à recevoir la barre ;
- la fente débouche verticalement vers le bas, le bras étant destiné à être accroché à la barre après insertion dans la fente ;
- la fente débouche longitudinalement vers l'extrémité arrière libre du tronçon ;
- les moyens de fixation comportent un mécanisme de fixation d'un tronçon intermédiaire du timon au châssis pour bloquer le pivotement du timon ;
- le tronçon intermédiaire du timon est fixé au châssis par l'intermédiaire d'un dispositif d'attache rapide, tel qu'un mécanisme d'attache à genouillère ;
- les tronçons d'extrémité arrière des deux bras arrière sont chacun équipés de moyens de fixation réalisés selon l'une quelconque des revendications précédentes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective de dessus qui représente une remorque réalisée selon les enseignements de l'invention, le timon étant assemblé avec le châssis roulant de la remorque ;
- la figure 2 est une vue en perspective de dessous qui représente la remorque de la figure 1, le timon étant démonté et rangé sous le plateau de la remorque pour faciliter son transport ;
- la figure 3 est une vue en perspective qui représente le timon de la remorque de la figure 1 démonté ;
- la figure 4 est une vue de détail en perspective qui ne concerne pas l'invention ;
- la figure 5 est une vue de détail du timon de la figure 3 qui représente des moyens de fixation rapide du timon qui sont agencés sur un tronçon d'extrémité d'un bras arrière du timon, les moyens de fixation comportant un loquet occupant ici une position de libération de l'ouverture de la fente ;
- la figure 6 est une vue similaire à celle de la figure 5 qui représente le loquet dans une position de fermeture de la fente dans laquelle il est verrouillé par un cliquet ;
- la figure 7 est une vue d'une extrémité avant du châssis de la remorque de la figure 1 dans laquelle le timon est immobilisé par des moyens de fixation rapide ;
- la figure 8 est une vue similaire à celle de la figure 5 qui représente un deuxième mode de réalisation des moyens de fixation du timon ;
- la figure 9 est une vue de côté qui représente la position du châssis roulant durant une opération d'assemblage du timon.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif un repère rattaché au timon comportant des orientations :
- longitudinale "L", dirigée d'arrière en avant selon le sens de déplacement normal de la remorque ;
- verticale "V", dirigée de bas en haut orthogonalement au plateau de la remorque ;
- transversale "T", dirigée de gauche à droite.

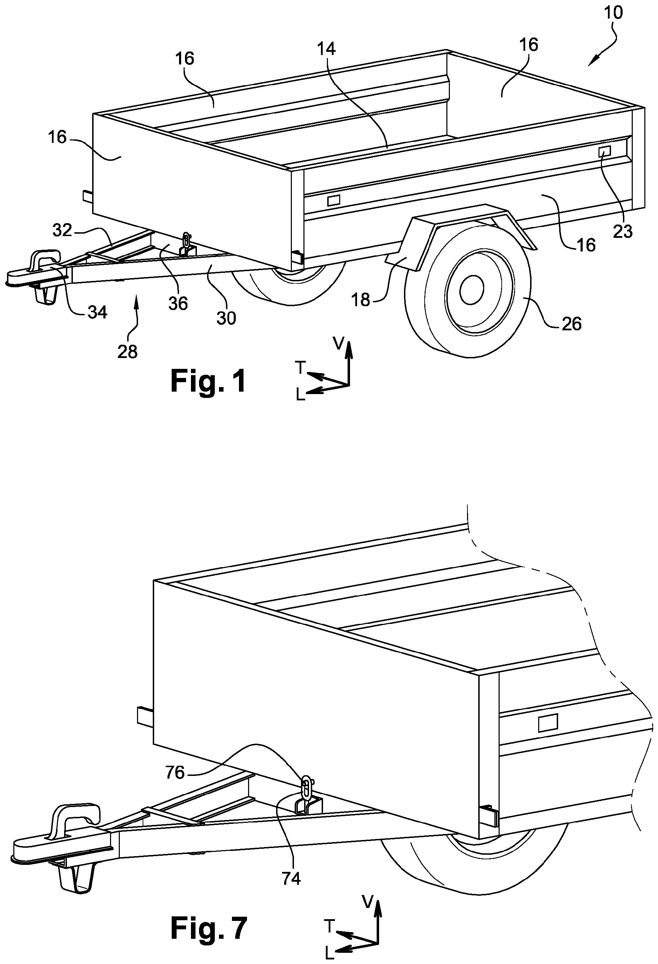

On a représenté à la figure 1 une remorque 10 qui est destinée à être attelée à un véhicule automobile routier (non représenté).

Le terme « véhicule automobile routier » désigne ceux des véhicules à moteur qui servent normalement au transport sur route de personnes ou de choses. Ce terme n'englobe pas les véhicules, tels que les tracteurs agricoles, dont l'utilisation pour le transport sur route de personnes ou de choses ou la traction sur route de véhicules utilisés pour le transport de personnes ou de choses n'est qu'accessoire.

Il s'agit d'une remorque 10 routière. Plus particulièrement il s'agit ici d'une remorque "bagagère".

Le terme "remorque routière" désigne une remorque qui est conçue pour rouler sur route, par exemple à une vitesse supérieure ou égale à 80 km/h. Une telle remorque présente par exemple un poids total autorisé en charge (PTAC) supérieur ou égal à 250 kg.

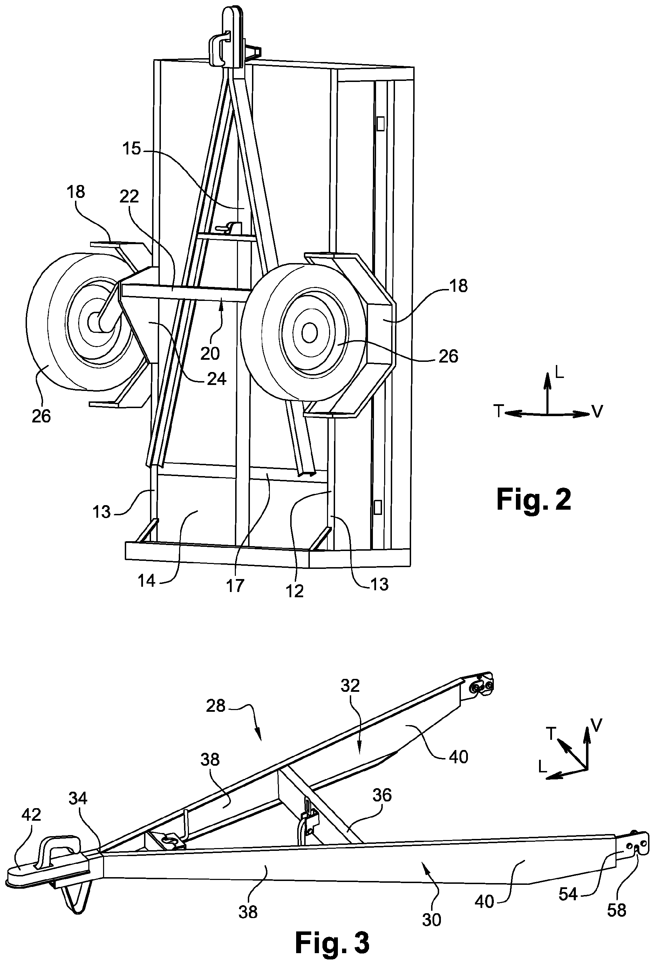

De manière classique, la remorque 10 comporte un châssis 12 roulant, visible à la figure 2. Le châssis 12 comporte un cadre formé d'un assemblage de poutres s'étendant dans un même plan horizontal. Le châssis 12 comporte au moins deux longerons 13 longitudinaux d'extrémité latérale. Le châssis 12 comporte ici un longeron 15 central qui est interposé transversalement entre les deux longerons 13 latéraux. Les longerons 13, 15 sont reliés rigidement entre eux par des traverses 17 transversales.

Plusieurs éléments sont destinés à être montés sur le châssis 12.

Le châssis 12 porte notamment un plateau 14 horizontal destiné à recevoir une charge à transporter. Les bords latéraux et les bords avant et arrière du plateau 14 sont équipés de ridelles 16 qui sont destinées à retenir la charge à bord du plateau 14. La ridelle 16 avant est ici fixe par rapport au châssis 12.

En outre, deux garde-boues 18 sont agencés latéralement de part et d'autre du plateau 14. Ces garde-boues 18 sont portés par le châssis 12. Ils sont agencés longitudinalement au milieu du plateau 14.

Le châssis 12 roulant comporte au moins un essieu 20 qui est agencé sous le plateau 14. L'essieu 20 présente une traverse 22 d'axe transversal qui relie deux flasques 24 verticaux longitudinaux dont chacun est fixé sous un longeron 13 latéral associé. L'essieu 24 porte deux roues 26 gauche et droite qui sont rotatives autour d'un axe transversale et qui sont agencées chacune à une extrémité transversale associée de l'essieu 24. Les roues 26 sont logées dans les garde-boues 18
Le châssis 12 roulant est aussi équipé de divers organes tels que des dispositifs 23 de signalisation réglementaires qui sont répartis sur les deux bords latéraux du châssis 12. S'agissant d'une remorque routière, le châssis 12 roulant est aussi équipé, selon les réglements en vigueur dans chaque pays, d'une plaque d'immatriculation ou de feux arrières, de freinage et/ou de position, qui sont commandés par le véhicule routier qui tracte la remorque 10.

La remorque 10 comporte aussi un timon 28 d'attelage qui est représenté plus en détails à la figure 3. Le timon 28 est un élément qui est apte à être fixé au châssis 12 roulant dans une position assemblée, par exemple après montage des autres éléments précités sur le châssis 12 roulant. L'attelage du timon 28 au véhicule automobile routier est conçu pour respecter la norme de l'UNECE : "E/ECE/324/Rev.1/Add.54/Rev.1/Amend.3 - E/ECE/TRANS/505/Rev.1/Add.54/Rev.1/Amend.3".

Le timon 28 est formé par une structure de poutres assemblées rigidement. Le timon 28 présente une forme globalement longitudinale. La structure du timon 28 présente deux branches 30, 32 formant un chevron qui s'étend globalement longitudinalement depuis un embranchement 34 d'extrémité avant. Les deux extrémités arrière des branches 30, 32 sont écartées transversalement d'une distance similaire à la largeur transversale du châssis 12.

Un entrait 36 relie transversalement les deux branches 30, 32 pour assurer une grande rigidité au timon 28. L'entrait 36 divise chaque branche 30, 32 en un tronçon 38 d'extrémité avant et un tronçon d'extrémité arrière formant un bras 40, le timon 28 présentant ainsi une forme de "A" pointant vers l'avant.

Chaque bras 40 est destiné à s'étendre sous le châssis 12 lorsque le timon 28 est en position assemblée avec le châssis 12. Les tronçons 38 d'extrémité avant sont destinés à faire saillie longitudinalement vers l'avant du plateau 14 dans cette position assemblée. Comme indiqué à la figure 1, en position assemblée, l'entrait 36 est destiné à être agencé le long d'une traverse 17 d'extrémité avant du châssis 12, sous la ridelle 16 d'extrémité avant.

L'extrémité avant du timon 22 est équipée d'un dispositif 42 d'attelage à un véhicule automobile.

Il arrive que la longueur hors tout de la remorque montée, c'est-à-dire de l'extrémité avant du timon 28 jusqu'à l'extrémité arrière du châssis 12 roulant, soit supérieure à la hauteur intérieure du camion de livraison. La longueur hors-tout de la remorque montée est par exemple supérieure ou égale à 2,50 m.

Comme cela est illustré à la figure 2, lors du transport de la remorque 10 en vue de la livraison à un revendeur, le timon 28 est avantageusement démonté et agencé contre le plateau 14, ici sous le plateau 14. Ainsi, le tronçon 38 d'extrémité avant de chaque bras est agencé de manière à ne pas faire saillie par rapport au plateau 14. Ceci permet d'obtenir un rangement compact des remorques dans le véhicule de livraison. Il est notamment possible de charger la remorque démontée "debout" dans le camion.

Afin de permettre un assemblage, c'est-à-dire un positionnement et une fixation, aisé du timon 28 sur le châssis 12 roulant après sa livraison, la remorque 10 comporte des moyens de fixation rapide du timon 28 au châssis 12. De tels moyens de fixation rapide permettent la fixation du timon au châssis rapidement et sans utilisation d'outil.

Les moyens de fixation comportent des moyens d'emboîtement comportant un premier organe d'emboîtement qui est porté par un tronçon 54 d'extrémité arrière de chaque bras 40. Le châssis 12 porte des deuxièmes organes de forme complémentaire. Les premiers organes d'emboîtement sont destinés à être emboîtés avec les deuxièmes organes d'emboîtement. Les organes d'emboîtement sont emboîtables selon une direction d'emboîtement qui est avantageusement orthogonale à la direction transversale pour faciliter la mise en position du timon 28 sur le châssis 12.

Lorsqu'ils sont emboîtés l'un dans l'autre, les organes d'emboîtement complémentaires forment une liaison pivotante autour d'un axe transversal pour permettre un pivotement du timon 28 par rapport au châssis 12. Un tel mouvement permet avantageusement de simplifier la fixation du timon 28 sur le châssis, comme cela sera expliqué par la suite. Après emboîtement, le timon 28 est maintenu en position monté par les organes d'emboîtement à l'encontre de la gravité.

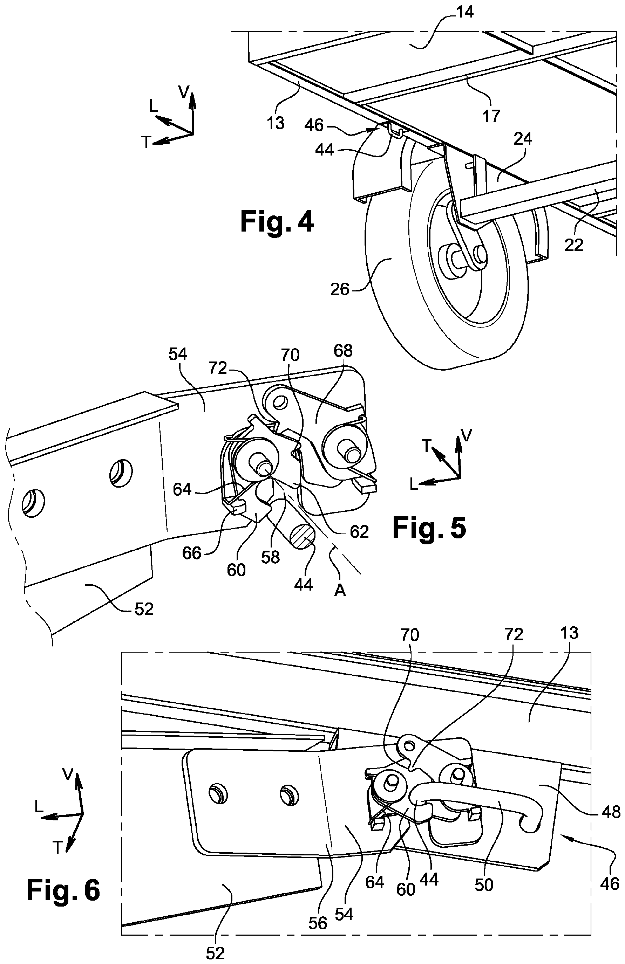

Dans le mode de réalisation représenté à la figure 6, le châssis 12 roulant comporte deux barres 44 transversales dont chacune est agencée à proximité d'un longeron 13 latéral associé. Ces barres 44 forment les deuxièmes organes d'emboîtement portés par le châssis. Dans le mode de réalisation représenté à la figure 6, une équerre 46 est fixée sous chaque longeron 13 latéral. Les deux équerres 46 sont agencées transversalement en vis-à-vis. Chaque équerre 46 comporte une aile 48 verticale depuis une face intérieure de laquelle s'étend un anneau 50 horizontal en forme de "U" dont un tronçon transversal avant forme la barre 44 transversale.

Les deux barres 44 transversales sont agencées coaxialement. Elles sont agencées en avant de l'essieu 20.

En variante non représentée de l'invention, chaque barre transversale est portée par un flasque associé de l'essieu.

Le timon 28 présentant une symétrie en miroir par rapport à un plan médian vertical longitudinal, un seul des bras 40 sera décrit par la suite, la description étant applicable à l'autre bras 40 par symétrie.

Le bras 40 est formé par un tronçon d'extrémité arrière d'une poutre 52 qui est prolongé par une plaque 54 verticale d'extrémité arrière. La plaque 54 formant un tronçon d'extrémité longitudinal arrière du bras 40 est fixée rigidement à la poutre 52. La plaque 54 présente un léger coude 56 par rapport à la poutre 52 de manière à être orientée longitudinalement. La plaque 54 forme le tronçon d'extrémité arrière du bras 40 qui porte le premier organe d'emboîtement complémentaire du deuxième organe d'emboîtement formé par la barre 44.

En variante non représentée de l'invention, le tronçon d'extrémité arrière du bras 40 est formé directement par un tronçon d'extrémité arrière de la poutre 52.

Le tronçon d'extrémité arrière du bras 40, formé par la plaque 54, comporte une fente 58 qui débouche par une ouverture dans une direction orthogonale à la direction transversale. Cette fente 58 forme ici le premier organe d'emboîtement des moyens d'emboîtement.

Dans le mode de réalisation représenté à la figure 5, la fente 58 débouche verticalement vers le bas. Il s'agit ici d'une fente rectiligne qui s'étend verticalement. La barre 44 transversale du châssis 12 est destinée à être insérée dans la fente 58, comme cela est représenté à la figure 6. A cet effet, la fente 58 présente des dimensions complémentaires au diamètre de la barre 44. Le bras 40 est destiné à être accroché à la barre 54 après insertion de la barre 44 dans la fente 58.

Comme cela sera expliqué plus en détails par la suite, cette orientation de la fente 58 est particulièrement avantageuse car elle permet d'insérer la barre 44 dans la fente 58 par gravité en faisant glisser la plaque 54 sur la barre 44 jusqu'à atteindre l'ouverture de la fente 58.

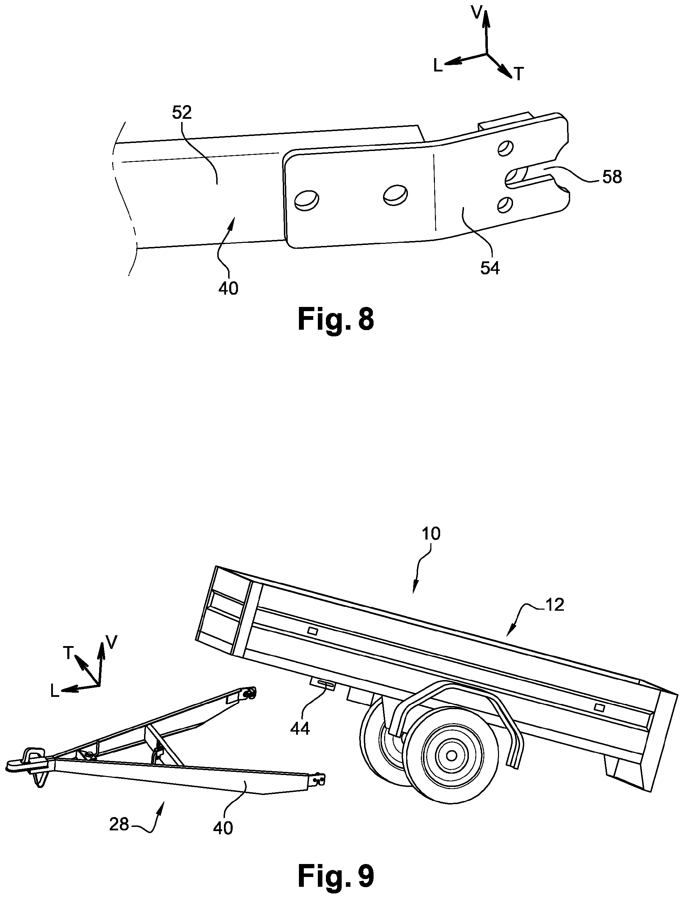

En variante, on comprendra néanmoins que l'invention est applicable à une fente 58 débouchant dans d'autres directions, par exemple longitudinalement vers l'arrière, comme cela est représenté à la figure 8.

Les moyens de fixation comportent en outre des moyens de verrouillage qui sont commandés entre un état de libération dans lequel les organes d'emboîtement sont libres d'être emboîtés l'un dans l'autre, et un état de verrouillage dans lequel les organes d'emboîtement sont bloqués dans leur position emboîtée. Ces moyens de verrouillage permettent la fixation du timon 28 avec le châssis 12. Les moyens de verrouillage sont embarqués sur le timon 28 et/ou sur le châssis 12.

Dans le mode de réalisation représenté aux figures et plus particulièrement à la figure 5, les moyens de verrouillage comportent un loquet 60 qui est monté mobile sur la plaque 54 entre une position de libération de l'ouverture de la fente 58 dans laquelle la barre 44 est libre d'être insérée dans la fente 58, comme représenté à la figure 5, et une position de fermeture de l'ouverture de la fente 58 dans laquelle le loquet 60 est agencé en travers de la fermeture de la fente 58 pour permettre d'emprisonner la barre 44 dans la fente 58 après son insertion.

Dans le mode de réalisation représenté aux figures, le loquet 60 est monté pivotant autour d'un axe "A" transversal sur une face interne de la plaque 54.

Les moyens de verrouillage sont avantageusement déclenchés automatiquement pour permettre une fixation rapide du timon 28 avec le châssis 12 pendant l'emboîtement des organes d'emboîtement complémentaires. Le passage automatique des moyens de verrouillage dans leur état verrouillé est notamment commandé au moyen d'une came 62 de contact

La came 62 est ici portée par le loquet 60 pour permettre de le commander vers sa position de fermeture. Cette came 62 est destinée à être poussée par la barre 44 lors de son insertion dans la fente 58 de manière à provoquer le pivotement automatique du loquet 60 depuis sa position de libération jusqu'à sa position de fermeture. A cet effet, la came 62 est interposée dans la fente 58 avant insertion de la barre 44.

La came 62 et le loquet 60 forment ici chacun un doigt d'une pièce unique. Les deux doigts sont sensiblement parallèles de manière qu'un espace en forme de "U" soit ménagé entre les doigts pour recevoir la barre 44.

Le loquet 60 est rappelé élastiquement vers sa position de libération afin de faciliter la fixation du timon 28 sur le châssis 12. Ceci permet notamment de garantir que le loquet 60 occupe bien sa position de libération pendant l'assemblage du timon 28 sur le châssis 12. Pour ce faire, un ressort de torsion 64 est interposé entre le loquet 60 et un ergot 66 de butée de la plaque 54.

Enfin, pour verrouiller le loquet 60 dans sa position de fermeture, les moyens de verrouillage comportent un cliquet 68 de verrouillage automatique qui est monté mobile sur la plaque 54 entre une position d'encliquetage pour verrouiller le loquet 60 en position de fermeture par emboîtement élastique de forme complémentaire entre le loquet 60 et le cliquet 68 et une position relevée.

A cet effet, le loquet comporte ici un cran 70. Le cliquet 68 comporte une encoche 72 destinée à coopérer avec le cran 70 pour bloquer le pivotement du loquet 60 vers sa position de libération. Le cliquet 68 est plus particulièrement monté pivotant sur la face interne de la plaque 54 autour d'un axe "B" transversal décalé par rapport à l'axe "A" du loquet 60. Le cliquet 68 est ainsi pivotant entre sa position angulaire d'encliquetage vers laquelle il est rappelé élastiquement et dans laquelle l'encoche 72 est susceptible d'être encliquetée avec le cran 70 du loquet 60, et sa position angulaire relevée dans laquelle l'encoche 72 est dégagée du cran 70.

Le loquet 60 et le cliquet 68 comportent des chemins de came coopérant lors du pivotement du loquet 60 vers sa position de fermeture pour soulever le cliquet 68 vers sa position angulaire relevée à l'encontre de l'effort de rappel élastique. Le verrouillage du loquet 60 dans sa position de fermeture est ainsi réalisé automatiquement lors de l'insertion de la barre 44 dans la fente 58.

Lorsque la remorque 10 est reçue avec le timon 28 démontée, les moyens de fixation réalisés selon les enseignements de l'invention permettent avantageusement d'assembler facilement le timon 28 sur le châssis 12.

Le timon 28 ainsi fixé aux barres 44 de châssis 12 par ses extrémités est pivotant autour de l'axe des barres 44 avec un débattement limité. Ceci permet notamment de simplifier l'assemblage du timon 28 comme cela sera expliqué par la suite.

Afin de finaliser la fixation du timon 28 sur le châssis 12 en bloquant ce pivotement, un tronçon intermédiaire du timon 28 qui est décalé longitudinalement par rapport aux barres 44, est muni de moyens de fixation au châssis 12. Plus particulièrement, comme cela est représenté à la figure 7, l'entrait 36 du timon 28 comporte des moyens de fixation rapide à la ridelle 16 d'extrémité avant du châssis 12 roulant.

Il s'agit ici d'un mécanisme 74 d'attache à genouillère coopérant avec un crochet 76 de fixation pour garantir un serrage vertical de l'entrait 36 contre la ridelle 16. Le mécanisme 74 est ici fixé à une face avant de l'entrait 36 tandis que le crochet 76 est fixé à la ridelle 16.

En variante non représentée de l'invention, le mécanisme à genouillère est fixé à la ridelle tandis que le crochet de fixation est fixé à l'entrait.

Lors de l'assemblage du timon 28 sur le châssis 12, le châssis 12 de la remorque 10 est posé sur ses roues 26 au sol. S'agissant ici d'un châssis 12 équipé d'un unique essieu 20, le châssis 12 tout d'abord penché vers l'arrière jusqu'à ce que son extrémité arrière repose au sol, comme cela est représenté à la figure 9. Le châssis 12 est ainsi posé au sol de manière stable, son extrémité avant étant relevée. Les barres 44 sont ainsi exposées et facilement accessibles.

Le timon 28 est ensuite agencé devant le châssis 12 en position approximativement horizontale, comme cela est représenté à la figure 8. Etant donné que le timon 28 est apte à être recevoir les barres 44 avec un débattement autour de l'axe des barres 44, le positionnement angulaire du timon 28 par rapport au châssis 12 n'a pas besoin d'être très précis.

Le timon 28 est soulevé de manière à être légèrement au-dessus du niveau des barres 44, puis il est approché longitudinalement vers l'arrière jusqu'à ce que chaque plaque 54 repose sur la barre 44 associée, en avant ou en arrière de la fente 58 indifféremment.

Le timon 28 étant partiellement en appui sur les barres 44, l'opérateur fait ensuite glisser le timon 28 longitudinalement sur les barres 44 jusqu'à ce que les fentes 58 soient en correspondance avec les barres 44.

Sous l'effet de la gravité, l'arrière du timon 28 s'accroche automatiquement aux barres 44 par insertion dans les fentes 58. Le loquet 60 occupe en effet sa position de libération sous l'effet du ressort 64 de torsion.

Lors de sa course d'insertion dans la fente 58, la barre 44 vient en contact avec la came 62. En poursuivant sa course, la barre 44 provoque la rotation du loquet 60 jusqu'à sa position de fermeture.

Simultanément, la rotation du loquet 60 provoque le soulèvement du cliquet 68. Lorsque le loquet 60 atteint sa position de fermeture, le cran 70 et l'encoche 72 sont en vis-à-vis. Le cliquet 68 est alors rappelé élastiquement dans sa position de verrouillage du loquet 60. La barre 44 est ainsi emprisonnée dans la fente 58.

Le timon 28 est ensuite pivoté autour des barres 44 jusqu'à ce que l'entrait 36 entre en contact avec l'extrémité avant du châssis 12 roulant. L'entrait 36 est alors fixé au châssis 12 par l'intermédiaire du mécanisme 74 de genouillère. Le timon 28 est alors rigidement fixé au châssis 12.

La remorque 10 réalisée selon les enseignements de l'invention permet avantageusement à un opérateur seul de réaliser l'opération d'assemblage du timon 28 sur le châssis 12 de manière aisée. En effet, l'opérateur s'occupe uniquement du positionnement du timon 28 sur le châssis car l'opération de fixation est réalisée automatiquement par les moyens de fixation rapide.

On comprendra que la fente et les moyens de verrouillage précédemment décrits sont susceptibles d'être portés par le châssis tandis que les barres de fixation sont susceptibles d'être portées par le timon.

Les organes d'emboîtement sont aussi susceptibles de prendre d'autres formes que celles décrites précédemment. Ainsi, l'invention porte aussi sur des organes d'emboîtement formant une liaison rotule. En ce cas, l'un des organes d'emboîtement est formé par une boule tandis que l'autre des organes d'emboîtement est formé par un logement complémentaire. Un tel montage fonctionne de manière analogue à un dispositif dit de "boîte à rotule", couramment utilisé pour atteler le timon à un véhicule tracteur.

## Revendications

1. Remorque (10) routière pour véhicule automobile routier, la remorque (10) comportant :
- un châssis (12) roulant ;
- un timon (28) longitudinal qui comporte au moins un bras (40) arrière dont un tronçon (54) d'extrémité longitudinale arrière est destiné à être fixé au châssis (12) par des moyens de fixation ;
**caractérisée en ce que** les moyens de fixation comportent des moyens d'emboîtement formés d'un premier organe d'emboîtement porté par le tronçon (54) d'extrémité arrière du bras (40) qui est destiné à être emboîté avec un deuxième organe d'emboîtement complémentaire porté par le châssis (12), les moyens de fixation comportant des moyens de verrouillage des organes d'emboîtement en position emboîtée qui sont embarqués sur le timon (28) et/ou sur le châssis (12) et qui sont commandés entre un état de libération et un état verrouillé.

2. Remorque (10) selon la revendication précédente, **caractérisée en ce que** les moyens d'emboîtement forment une liaison pivotante autour d'un axe transversale entre le timon (28) et le châssis (12).

3. Remorque (10) selon l'une quelconque des revendications précédentes, **caractérisée en ce que** les moyens de verrouillage comportent une came de contact qui commande automatiquement les moyens de verrouillage dans leur état verrouillé lors de l'emboîtement des organes d'emboîtement l'un dans l'autre.

4. Remorque (10) selon l'une quelconque des revendications précédentes, **caractérisée en ce que** les organes d'emboîtement sont emboîtables selon une direction orthogonale à la direction transversale.

5. Remorque selon la revendication précédente, **caractérisée en ce que** le premier organe d'emboîtement est formé par une fente (58) qui débouche par une ouverture dans une direction orthogonale à la direction transversale, le deuxième organe d'emboîtement étant formé par une barre (44) transversale fixe du châssis (12) qui est destinée à être insérée dans la fente (58), les moyens de verrouillage comportant un loquet (60) mobile entre une position de libération de l'ouverture de la fente (58) et une position de fermeture de l'ouverture de la fente (58).

6. Remorque (10) selon la revendication précédente prise en combinaison avec la revendication 3, **caractérisée en ce que** la came (62) commande le loquet vers sa position de fermeture, la came (62) étant interposée dans la fente (58) avant insertion de la barre (44) pour commander automatiquement le loquet (60) dans sa position de fermeture lors de l'insertion de la barre (44).

7. Remorque (10) selon la revendication précédente, **caractérisée en ce que** le loquet (60) est rappelé élastiquement vers sa position de libération.

8. Remorque (10) selon la revendication précédente, **caractérisée en ce que** les moyens de verrouillage comportent un cliquet (68) de verrouillage automatique du loquet (60) en position de fermeture par emboîtement élastique de formes complémentaires entre le loquet (60) et le cliquet (68).

9. Remorque (10) selon l'une quelconque des revendications 5 à 8, **caractérisée en ce que** le loquet (60) est monté pivotant autour d'un axe transversal (A) sur le tronçon (54) d'extrémité arrière du bras (40).

10. Remorque (10) selon la revendication précédente prise en combinaison avec la revendication 6, **caractérisée en ce que** la came (62) et le loquet (60) forment chacun un doigt d'une pièce unique en forme de "U" apte à recevoir la barre (44).

11. Remorque (10) selon l'une quelconque des revendications 5 à 10, **caractérisée en ce que** la fente (58) débouche verticalement vers le bas, le bras (40) étant destiné à être accroché à la barre (44) après insertion dans la fente (58).

12. Remorque (10) selon l'une quelconque des revendications 5 à 10, **caractérisée en ce que** la fente (58) débouche longitudinalement vers l'extrémité arrière libre du tronçon (54).

13. Remorque (10) selon l'une quelconque des revendications précédentes, **caractérisée en ce que** les moyens de fixation comportent un mécanisme de fixation d'un tronçon (36) intermédiaire du timon (28) au châssis (12) pour bloquer le pivotement du timon (28).

14. Remorque (10) selon la revendication précédente, **caractérisée en ce que** le tronçon intermédiaire du timon (28) est fixé au châssis (12) par l'intermédiaire d'un dispositif (74) d'attache rapide, tel qu'un mécanisme d'attache à genouillère.

15. Remorque (10) dont le timon (28) comporte deux bras (40) arrière, **caractérisée en ce que** les tronçons (54) d'extrémité arrière des deux bras (40) arrière sont chacun équipés de moyens de fixation réalisés selon l'une quelconque des revendications précédentes.

## Patentansprüche

1. Straßenanhänger (10) für ein Straßenkraftfahrzeug, wobei der Anhänger (10) Folgendes beinhaltet:
- ein rollendes Fahrgestell (12);
- eine Längsdeichsel (28), die mindestens einen hinteren Arm (40) beinhaltet, wovon ein hinterer Längsendabschnitt (54) dazu bestimmt ist, durch Befestigungsmittel am Fahrgestell (12) befestigt zu werden;
**dadurch gekennzeichnet, dass** die Befestigungsmittel Mittel zum Zusammenfügen beinhalten, die von einem ersten Organ zum Zusammenfügen gebildet werden, das vom hinteren Endabschnitt (54) des Arms (40) getragen wird, das dazu bestimmt ist, mit einem zweiten komplementären Organ zum Zusammenfügen zusammengefügt zu werden, das vom Fahrgestell (12) getragen wird, wobei die Befestigungsmittel Mittel zum Verriegeln der Organe zum Zusammenfügen in der zusammengefügten Stellung beinhalten, die auf der Deichsel (28) und/oder auf dem Fahrgestell (12) montiert sind und die zwischen einem Entriegelungszustand und einem Verriegelungszustand gesteuert werden.

2. Anhänger (10) nach dem vorstehenden Anspruch, **dadurch gekennzeichnet, dass** die Mittel zum Zusammenfügen eine schwenkbare Verbindung um eine Querachse zwischen der Deichsel (28) und dem Fahrgestell (12) bilden.

3. Anhänger (10) nach einem der vorstehenden Ansprüche, **dadurch gekennzeichnet, dass** die Verriegelungsmittel einen Kontaktnocken beinhalten, der die Verriegelungsmittel automatisch in ihren Verriegelungszustand steuert, wenn die Organe zum Zusammenfügen miteinander zusammengefügt werden.

4. Anhänger (10) nach einem der vorstehenden Ansprüche, **dadurch gekennzeichnet, dass** die Organe zum Zusammenfügen in einer Richtung orthogonal zur Querrichtung zusammenfügbar sind.

5. Anhänger nach dem vorstehenden Anspruch, **dadurch gekennzeichnet, dass** das erste Organ zum Zusammenfügen durch einen Schlitz (58) gebildet ist, der sich durch eine Öffnung in einer Richtung orthogonal zur Querrichtung öffnet, wobei das zweite Organ zum Zusammenfügen durch eine feste Querstange (44) des Fahrgestells (12) gebildet ist, die dazu bestimmt ist, in den Schlitz (58) eingesetzt zu werden, wobei die Verriegelungsmittel einen Riegel (60) beinhalten, der zwischen einer Stellung zum Lösen der Schlitzöffnung (58) und einer Stellung zum Schließen der Schlitzöffnung (58) beweglich ist.

6. Anhänger (10) nach dem vorstehenden Anspruch in Kombination mit Anspruch 3, **dadurch gekennzeichnet, dass** der Nocken (62) den Riegel in seine Schließstellung steuert, wobei der Nocken (62) vor dem Einsetzen der Stange (44) in den Schlitz (58) eingefügt wird, um den Riegel (60) in seiner Schließstellung beim Einsetzen der Stange (44) automatisch zu steuern.

7. Anhänger (10) nach dem vorstehenden Anspruch, **dadurch gekennzeichnet, dass** der Riegel (60) elastisch in seine Entriegelungsstellung zurückgeführt wird.

8. Anhänger (10) nach dem vorstehenden Anspruch, **dadurch gekennzeichnet, dass** die Verriegelungsmittel eine automatische Verriegelungsklinke (68) des Riegels (60) in Schließstellung durch elastisches Zusammenfügen von komplementären Formen zwischen dem Riegel (60) und der Klinke (68) beinhalten.

9. Anhänger (10) nach einem der Ansprüche 5 bis 8, **dadurch gekennzeichnet, dass** der Riegel (60) am hinteren Endabschnitt (54) des Arms (40) um eine Querachse (A) schwenkbar montiert ist.

10. Anhänger (10) nach dem vorstehenden Anspruch in Kombination mit Anspruch 6, **dadurch gekennzeichnet, dass** der Nocken (62) und der Riegel (60) jeweils einen Daumen eines einzelnen "U"-förmigen Stücks bilden, das zur Aufnahme der Stange (44) geeignet ist.

11. Anhänger (10) nach einem der Ansprüche 5 bis 10, **dadurch gekennzeichnet, dass** sich der Schlitz (58) vertikal nach unten öffnet, wobei der Arm (40) dazu bestimmt ist, nach dem Einsetzen in den Schlitz (58) an der Stange (44) eingehängt zu werden.

12. Anhänger (10) nach einem der Ansprüche 5 bis 10, **dadurch gekennzeichnet, dass** sich der Schlitz (58) in Längsrichtung zum freien hinteren Ende des Abschnitts (54) öffnet.

13. Anhänger (10) nach einem der vorstehenden Ansprüche, **dadurch gekennzeichnet, dass** die Befestigungsmittel einen Befestigungsmechanismus eines Zwischenabschnitts (36) der Deichsel (28) an dem Fahrgestell (12) beinhalten, um das Schwenken der Deichsel (28) zu blockieren.

14. Anhänger (10) nach dem vorstehenden Anspruch, **dadurch gekennzeichnet, dass** der Zwischenabschnitt der Deichsel (28) mittels einer Vorrichtung (74) zur Schnellbefestigung, wie beispielsweise einem Kniehebelbefestigungsmechanismus, am Fahrgestell (12) befestigt ist.

15. Anhänger (10), dessen Deichsel (28) zwei hintere Arme (40) beinhaltet, **dadurch gekennzeichnet, dass** die hinteren Endabschnitte (54) der beiden hinteren Arme (40) jeweils mit Befestigungsmitteln ausgestattet sind, die nach einem der vorstehenden Ansprüche ausgeführt sind.

## Claims

1. Road trailer (10) for road motor vehicle, the trailer (10) comprising:
- a rolling chassis (12);
- a longitudinal drawbar (28) comprising at least one rear arm (40), of which a segment (54) of the rear longitudinal end is intended to be secured to the chassis (12) by securing means;
**characterised in that** the securing means comprise interlocking means formed of a first interlocking member supported by the segment (54) of the rear end of the arm (40) that is intended to be interlocked with a second complementary interlocking member supported by the chassis (12), the securing means comprising the locking means of the interlocking members in an interlocked position that are embedded on the drawbar (28) and/or on the chassis (12) and that are controlled between a released state and a locked state.

2. Trailer (10) according to the preceding claim, **characterised in that** the interlocking means form a connection pivoting about a transversal axis between the drawbar (28) and the chassis (12).

3. Trailer (10) according to any one of the preceding claims, **characterised in that** the locking means comprise a contact cam which automatically controls the locking means in the locked state thereof during the interlocking of the interlocking members, one in the other.

4. Trailer (10) according to any one of the preceding claims, **characterised in that** the interlocking members can be interlocked along a direction orthogonal to the transversal direction.

5. Trailer according to the preceding claim, **characterised in that** the first interlocking member is formed by slot (58) that leads through an opening in a direction orthogonal to the transversal direction, the second interlocking member being formed by a fixed transversal bar (44) of the chassis (12) that is intended to be inserted in the slot (58), the locking means comprising a mobile latch (60) between a released position of the opening of the slot (58) and a closed position of the opening of the slot (58).

6. Trailer (10) according to the preceding claim taken in combination with claim 3, **characterised in that** the cam (62) controls the latch towards the closed position thereof, the cam (62) being inserted in the slot (58) before the insertion of the bar (44) to automatically control the latch (60) in the closed position thereof during the insertion of the bar (44).

7. Trailer (10) according to the preceding claim, **characterised in that** the latch (60) is elastically biased towards the released position thereof.

8. Trailer (10) according to the preceding claim, **characterised in that** the locking means comprise a ratchet (68) automatically locking the latch (60) in a closed position by elastically interlocking complementary forms between the latch (60) and the ratchet (68).

9. Trailer (10) according to any one of claims 5 to 8, **characterised in that** the latch (60) is mounted pivoting about a transversal axis (A) on the segment (54) of the rear end of the arm (40).

10. Trailer (10) according to the preceding claim taken in combination with claim 6, **characterised in that** the cam (62) and the latch (60) each form a finger of one single U-shaped part capable of receiving the bar (44).

11. Trailer (10) according to any one of claims 5 to 10, **characterised in that** the slot (58) opens vertically downwards, the arm (40) being intended to be fastened to the bar (44) after insertion in the slot (58).

12. Trailer (10) according to any one of the claims 5 to 10, **characterised in that** the slot (58) opens longitudinally towards the rear free end of the segment (54).

13. Trailer (10) according to any one of the preceding claims, **characterised in that** the securing means comprise a mechanism for securing a segment (36) intermediate of the drawbar (28) to the chassis (12) to block the pivoting of the drawbar (28).

14. Trailer (10) according to the preceding claim, **characterised in that** the intermediate segment of the drawbar (28) is secured to the chassis (12) by means of a quick fastening device (74), such as a fastening mechanism provided with a knee lever.

15. Trailer (10) of which the drawbar (28) comprises two rear arms (40), **characterised in that** the rear end segments (54) of the two rear arms (40) are each equipped with securing means according to any one of the preceding claims.
